Europäisches Patentamt

European Patent Office

Office européen des brevets

(11) Publication number : **0 485 350 A1**

# (12) EUROPEAN PATENT APPLICATION

(21) Application number : **91830487.4**

(22) Date of filing : **11.11.91**

(51) Int. Cl.⁵ : **A47J 43/12, B29B 7/74**

(30) Priority : **09.11.90 IT 1254190**

(43) Date of publication of application :
**13.05.92 Bulletin 92/20**

(84) Designated Contracting States :
**AT BE CH DE DK ES FR GB GR IT LI LU NL SE**

(71) Applicant : **SAECO S.r.l.**
**Via Tamagno, 7**
**I-20124 Milano (IT)**

(72) Inventor : **Bonanno, Francesco**
**Via Kennedy, 41**
**I-40040 Silla (Bologna) (IT)**

(74) Representative : **Pederzini, Paolo**
**c/o BUGNION S.p.A. Via dei Mille, 19**
**I-40121 Bologna (IT)**

(54) **Device for homogenising, mixing and emulsifying liquid products.**

(57)   The device comprises a pump (1) driven by a motor (2) and connected by an inlet conduit (3) to a container (4) of a product to be treated and to preferably adjustable valve means (5) for the aspiration of air. The pump delivery is connected to an outlet conduit (6) realised and/or equipped in such a way as to slow down the outlet flow of the product-air mixture aspirated by the said pump (1), so that said mixture is subjected to energetic mechanical whipping action internally to the said pump (1) and also during its passage through the said outlet conduit (6); thus, on exiting from said outlet conduit (6) it assumes the desired creamy aspect.

Fig.4

EP 0 485 350 A1

The invention relates to a device for application in industrial or domestic contexts, easy to make and very reliable, for homogenizing, mixing and emulsifying liquid products in general, in particular milk, coffee and cream, with the aim of giving these products a creamy look, and if necessary also to heat them up. This device is for example suitable for whipping cream, either at room temperature or previously refrigerated, and to create creamy milk and/or coffee, hot or cold, particularly with breakfast in mind.

The characteristics of the present device, and the advantages it confers, will become evident from the following description of some preferred embodiments of said invention, here illustrated purely in the form or non-limiting examples, in the accompanying figures of the two attached sheets, in which:

– Figure 1 shows schematically a first embodiment of the device;

– Figure 2 shows details according to a section along line II-II of fig. 1;

– Figure 3 shows schematically and with some parts in section, a different embodiment of the last part of the circuit of the device;

– Figures 4, 5 and 6 show, schematically, three more embodiments of the device;

– Figure 7 shows details according to a section along line VII-VII of fig. 6.

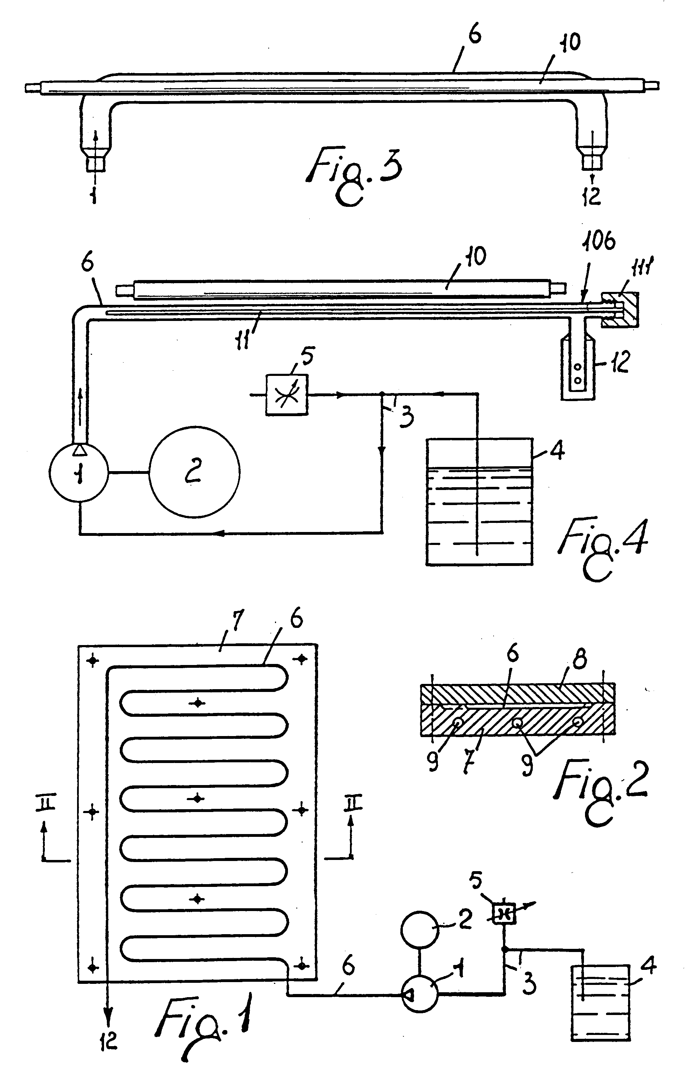

With reference to the drawings, fig. 1 shows a pump 1 of any type, for example a displacement pump (gear-type, rotary-type, vane-type) or a reciprocating pump (suction-type), or rotary-reciprocating, or of other type, driven preferably by a motor 2 of any suitable type, for example an electric motor. Parts 1 and 2 can be connected fixedly or removably, in such a way that, for example, it is possible to put the motorless part into the refrigerator. This removable faculty is useful for example in the domestic version of the device, in order to ensure the correct cooling of the device and to permit of repeated use, without the need to empty the device after each use. The pump 1 has the function of aspirating the liquid product to be treated and subjecting it to an energetic mechanical action. Good results have been obtained with gear pumps and suction-pumps, but any type can be used for the purpose. The rating characteristics of parts 1 and 2 will be chosen according to the quantity of the product to be treated and thus according to the use modalities, domestic or industrial, of the device.

The pump 1 aspirator is connected, by means of an inlet conduit 3 of suitable section, to the container 4 of the product. The inlet conduit 3 will advantageously have at its end a metal or plastic hollow lance, which lance can be inserted into a cardboard container of the type used for packaging milk, coffee or whipping cream.

Valve means 5 of any known type (for example an adjustable throat) is envisaged, connected to the said inlet conduit 3, which valve means 5 permits of introducing a correct quantity of air into the product flow aspirated by the said pump 1. The said valve means 5 may be equipped with a graduated knob (not illustrated) which facilitates the regulation and adaptation of the said valve means 5 to the product to be treated. The air has the aim of slowing down the quantity of product aspirated by the pump and of enhancing and stabilising the emulsion and the bulk increase that the product attains during passage through the said device.

The pump 1 delivery is connected to an outlet conduit 6 of any suitable material having internal section and length appropriate to the required slowing of the product flow, in order that said product flow undergoes energetic mechanical whipping action by the internal components of the pump 1 and in order to contribute to the process of homogenisation, mixing, emulsifying and bulk increase that the product undergoes on passing through the present device.

It is not excluded that the same results could be obtained by using an outlet conduit 6 of wide section also, and of modest length, and by throttling opportunely the outlet of the said outlet conduit 6, for example with a spout of suitable diameter and preferably removable in order to facilitate the cleaning of the device.

If the product to be treated has not been previously chilled or heated, but must be by the end of the process, it can be envisaged that at least one of the conduits 3 and/or 6 be chilled or heated with any solution (see below). For example, to produce coffee cream, the starting product could be coffee mixture of the type commercialised in cardboard cartons which would then be heated during its passage through the conduits 3 and/or 6. To produce creamy milk, or whipped cream, the product can be previously refrigerated or worked upon at room temperature, so that the conduits 3 and/or 6 can be kept at room temperature. To produce hot creamy milk, the milk can be heated on passing through the conduits 3 and/or 6. If, with the same device, alternately hot and cold products, or products at room temperature have to be treated, means will be envisaged for cooling, or at least for bringing to room temperature both conduits 3 and/or 6 first heated by other means, each time that a transfer from working with hot products to working with cold products or with room temperature products is necessary (see below).

In cases in which the outlet conduit 6 is made without final throttling possibility and the product must be braked with a correct dimensioning of its length and of its internal diameter, it is envisaged that the heat exchange of heating and of cooling should be effected on this part of the circuit since it is the longest.

One of the problems to be resolved in the realisation of a device which works as heretofore described, consists in reconciling the considerable length of the outlet conduit 6 and its small section, with the need to clean said outlet conduit 6 periodically in order to ensure hygiene. To solve this problem, (see figures 1 and 2), the outlet conduit 6 has been made in the form of a groove, for example on the face of a plate 7, to which is fixed another plate 8 having the function of closing the groove section and transforming it into a conduit. In the example in fig.1, the outlet conduit 6 has a serpentine form, but it can be made in spiral form, or in other ways. By separating the plate 8 from the plate 7, it is possible to reach the channels defining the outlet conduit 6 and clean them with liquid and a brush.

In figure 2 it can be seen that at least one of the plates 7 and 8 can incorporate electic resistance 9, for example, of the armoured type, by means of which it is possible when necessary to heat up the outlet conduit 6, creating in this way a sort of small electric heater. The electric resistance 9 can be activated together with the electric pump 1 and 2 or it can be permanently active and controlled by a thermostat. If the product must be treated at room temperature, the resistance 9 will not be activated. If the device must pass rapidly from hot working to cold working, channels will be envisaged where water at normal temperature from the municipal supply will be introduced and will circulate to realise a rapid cooling of the water.

The above-described solution, which makes reference to figures 1 and 2, is rather complicated, especially since the section of the outlet conduit 6 is small.

This problem can be solved by adopting the following solution. The outlet conduit 6 can be of wide section, and internally to said outlet conduit 6 a body can be housed which body reduces the section of the said outlet conduit 6 to the desired size. The section changes from being full to being annular, increasing the loss of pressure due to friction produced by the outlet conduit 6, which therefore can be of a shorter length than that of the full-section version. Figure 3 illustrates the outlet conduit 6 having internally, in lengthwise direction, an armoured electric resistance which can be fixed or arranged so that it can be withdrawn from the said outlet conduit 6 for internal cleaning or maintenance of the said outlet conduit 6. For this last aim, differently from what is illustrated in figure 3, the outlet conduit 6 may be envisaged to have a "T" shaped end piece in order to provide a mouth, necessary for the removable application of the resistance 10. The resistance 10 performs instantaneously a heating action and is activated and de-activated together with the activation and de-activation of the pump 1 and 2.

Figure 4 shows a further perfected solution, which envisages that the electric resistance 10 is external to the outlet conduit 6 and which also envisages internally to said outlet conduit 6 a rod 11 of any suitable material, even being flexible, which rod 11 has a double function: to reduce the internal section of the outlet conduit 6 to the appropriate size; and to ensure through its vibrations a constant internal cleaning of the outlet conduit 6, thanks also to the pulsating circulation of the product determined by the pump 1. A jet-breaker spout 12 is positioned on the outlet mouth of the outlet conduit 6, which mouth is formed out of a tract of said outlet conduit 6, said conduit being "T"-shaped, as indicated by 106 in figure 4; said "T" shape permits the realisation of the said small mouth on which plug 111 can be screwed solid to an extremity of the rod 11.

The rod 11 can be metallic and/or of suitable plastic material. Differently from the illustration, the rod 11 can be anchored at the initial rather than at the final tract of the outlet conduit 6.

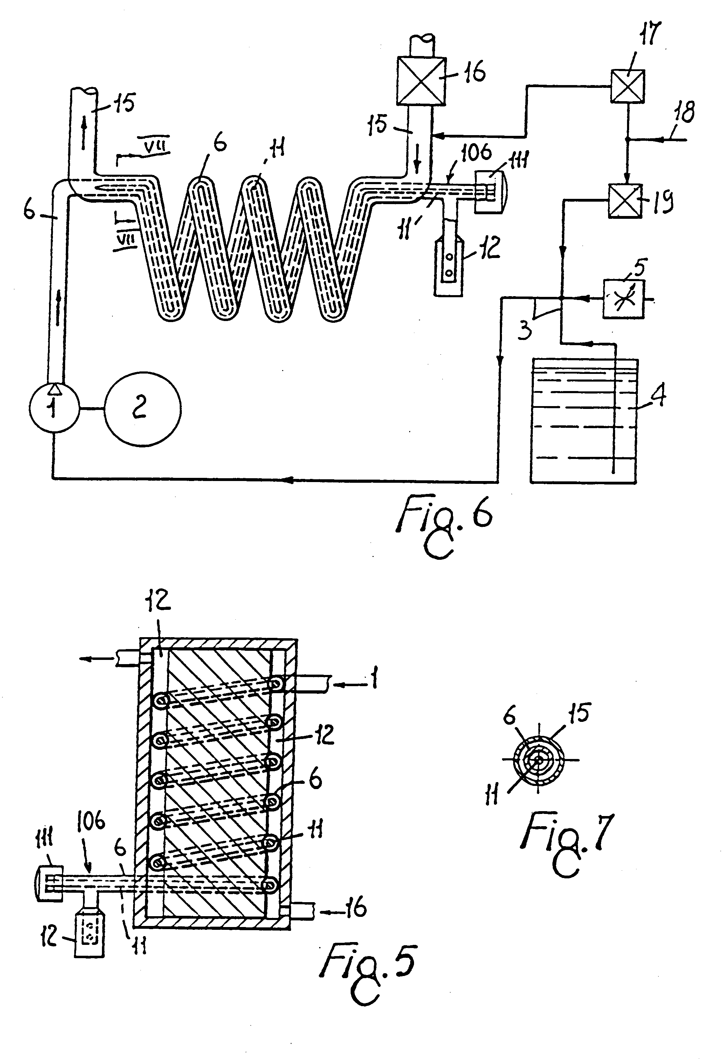

Figure 5 shows another, further perfected solution, which envisages the outlet conduit 6 spiralised internally to an annular space 52 closed at its ends and defined by two concentric bodies 13 and 14, so that the part of the annular space 12 not occupied by the spirals of the outlet conduit 6 describes a spiral-shaped channel in which hot water can be made to circulate, or steam, or water from the municipal supply if room temperature is required for an operation. This solution and the even more perfected one the description of which follows, with reference to figures 6 and 7, are particularly suitable for application on coffee machines such as those used in bars and clubs.

In the final figures the outlet conduit 6, with internally the rod 11, is bent into a cylindrical spiral shape, so that it occupies little space and it is circumscribed by another spiralised tube 15 which is connected at one of its ends, with the interpositioning of a solenoid valve 16, to the boiler producing hot water or steam. When the electric pump is activated 1 and 2, the solenoid value 16 having calibrated or calibrate orifice is opened and causes a suitable quantity of hot water or steam to circulate in the interspace existing between the tubes of the outlet conduit 6 and those of the spiralised tube 15, in an opposite flow direction to that of the product in the outlet conduit 6, which product is then heated up. If the product must be worked upon in cool or room temperature conditions, as for example in the case of milk or whipping cream, on activating the electric pump 1, a solenoid valve 17 is opened which connects the conduit 15 to another conduit 18, which conduit 18 is connected to the municipal water supply. In this way, the outlet conduit 6 is cooled, even if it had been used just before for the production of, for example, hot custard.

By means of another solenoid valve 19, the conduit 18 is connected to the inlet conduit 3. This further solenoid valve 19 opens during the cleaning phase of the device, when the last part of the same inlet conduit 3 is immersed in a container with some detergent. The cleaning phase can be effected even more efficiently by unscrewing the plug 111, agitating the rod 11 in the fashion of a tube-brush, and then removing the same rod 11 completely in order to clean it perfectly.

**Claims**

1. A domestic or industrial device, for homogenising, mixing, and emulsioning liquid products in general, in particular milk, coffee and cream, to give to these products a creamy aspect which makes them particularly suitable for breakfast consumption, comprising:
   – at least one pump (1) of any type, having suitable characteristics and being driven by any suitable motor (2) connected or connectable to the said pump (1);
   – an inlet conduit (3) which connects the aspiration of the said pump (1) to a container (4) of the product to be treated;
   – at least one valve means (5), regulated or regulatable, also connected to the aspiration of the said pump (1), to permit of the injection of a correct quantity of air into the product aspirated by the said pump (1);
   – an outlet conduit (6) connected to the outlet of the pump (1) and made in any way and/or equipped with any suitable means so as accurately to slow down the outlet flow of the product-air mixture from the said pump (1), in such a way that said mixture must be subjected to an energetic mechanical whipping action inside the pump (1) and will assume, also when running through and exiting from said outlet conduit (6), the required creamy aspect.

2. A device as in claim 1, wherein if the product to be treated must be heated or cooled, means (10) are envisaged which condition the said product in such a way before it is aspirated by the said pump (1).

3. A device as in claim 1, wherein if the product to be treated must be heated or cooled, means (10) of any suitable type are envisaged which condition the product in such a way during its passage through at least one of the inlet conduits (3) and/or one of the outlet conduits (6) of the pump (1).

4. A device as in claim 1, in which the outlet conduit (6) is sufficiently long and narrow or in any case correctly proportioned legthwise and in internal section to perform the necessary slowing-down of the product.

5. A device as in claim 4, wherein the outlet conduit (6) has full section.

6. A device as in claim 4, wherein the outlet conduit (6) has annular section.

7. A device as in claim 4, in which the outlet conduit (6) is in the form of a groove on a body (7) which body (7) has another body (8) removably fixed upon it, which body (8) closes the said groove and makes of it a conduit (6); wherein said two bodies (7) and (8) can be separated and the said conduit (6) efficiently cleaned with liquid or a brush.

8. A device as in any one or more of the preceding claims, wherein said means for the heating or cooling (10) of the said product are positioned externally to the outlet conduit (6).

9. A device as in any one or more of the preceding claims, wherein said heating or cooling means (10) are positioned internally to the inlet conduit (3).

10. A device as in claim 9, wherein the said heating or cooling means (10) are removable for ordinary or special maintenance needs.

11. A device as in any one or more of the previous claims from claim 1 to claim 8, wherein the outlet conduit (6) is internally and longitudinally equipped with at least one rod (11) of any suitable, preferably flexible, material, saied rod (11) being fixed by at least one of its ends to the same outlet conduit (6), preferably removably, with the following aims:
    – to reduce the internal section of the outlet conduit (6) to the appropriate value;
    – to keep the outlet conduit (6) clean, thanks to the vibrations which said rod (11) is subjected to in part from the product and in part from the pulsating movement of the pump (1);
    – to permit of efficient cleaning of the outlet conduit during the washing phase, inasmuch as the rod (11) can be partially removed, displaced in longitudinal direction and used as a tube-brush, and then fully removed.

12. A device as in claim 11, wherein the rod (11) is fixed at one of its ends to a plug (111) screwed to a final, "T"-shaped tract (106) of the outlet conduit (6).

13. A device as in claim 11, wherein the rod (11) can have a linear and smooth form, or it can have any other form, for example helical.

14. A device as in one or more of the preceding claims, wherein the outlet conduit (6) comprises a metallic tube bent into a cylindrical helical shape or spiralised to occupy little space.

15. A device as in one or more of the previous claims, wherein the outlet conduit (6) is inserted in a chamber (12) or tube (15) of any suitable type, where hot or cold fluid can be made to circulate, preferably against the flow of the product in the same outlet conduit (6).

16. A device as in claim 14, wherein the chamber (12) or the tube (15) which circumscribe the outlet conduit (6) can be connected by means of respective solenoid valves (16) and (17) to the source of the said hot fluid, for example to a boiler producing hot water or a geyser-type machine of the type used in coffee-bars which produces steam, or similar machines, or said outlet conduit (6) can be connected with the municipal water supply (18) for the cooling phase, its being envisaged that by means of a further solenoid valve (19), the said water supply (18) can be connected to the inlet conduit (3) of the pump (1), for the washing phase of the device, during which the said inlet conduit (3) sends detergent liquid into circulation.

*Fig.3*

*Fig.4*

*Fig.2*

*Fig.1*

Fig. 6

Fig. 5

Fig. 7

**European Patent Office**

**EUROPEAN SEARCH REPORT**

Application Number

EP 91 83 0487

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-3 854 700 (MACMANUS)<br>* column 2, line 43 - column 3, line 33; figures 1,2 *<br>--- | 1-5 | A47J43/12<br>B29B7/74 |
| Y | GB-A-1 333 088 (DUNLOP HOLDINGS LIMITED)<br>* page 3, line 68 - page 3, line 117; figure *<br>--- | 1-5 | |
| A | DE-B-1 190 403 (ROSENBERGER)<br><br>* column 6, line 21 - column 7, line 17; figures *<br>--- | 3,6,8,<br>11,13-16 | |
| A | WO-A-8 810 085 (PASSONI)<br>* page 2, paragraph 5 - page 6, paragraph 2; figures *<br>--- | 1 | |
| A | DE-A-3 209 892 (F. VAIHINGER GMBH & CO. KG)<br>* claim 1; figures I-3 *<br>--- | 15 | |
| A | GB-A-1 398 074 (MACMANUS)<br>* the whole document *<br><br>----- | 1,2 | **TECHNICAL FIELDS SEARCHED (Int. Cl.5 )**<br><br>A47J<br>A01J<br>B01F<br>B29C |

The present search report has been drawn up for all claims

| Place of search | Date of completion of the search | Examiner |
|---|---|---|
| THE HAGUE | 24 FEBRUARY 1992 | VISTISEN L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)